**Europäisches Patentamt**

**European Patent Office**

**Office européen des brevets**

(19)

(11) Veröffentlichungsnummer : **0 118 786**
**B1**

(12) **EUROPÄISCHE PATENTSCHRIFT**

(45) Veröffentlichungstag der Patentschrift :
**20.01.88**

(21) Anmeldenummer : **84101467.3**

(22) Anmeldetag : **13.02.84**

(51) Int. Cl.⁴ : **C 08 L 67/06**, C 08 J   3/24,
C 08 J   3/28, C 08 G 63/54

(54) **Verfahren zur Herstellung von Formstoffen aus ungesättigten Polyesterharzen.**

(30) Priorität : **16.02.83 DE 3305222**

(43) Veröffentlichungstag der Anmeldung :
**19.09.84 Patentblatt 84/38**

(45) Bekanntmachung des Hinweises auf die Patenterteilung : **20.01.88 Patentblatt 88/03**

(84) Benannte Vertragsstaaten :
**DE FR GB IT NL**

(56) Entgegenhaltungen :
**EP-A- 0 003 735**
**DE-A- 2 520 314**
**FR-A- 1 584 536**
**US-A- 3 919 063**
**PATENT ABSTRACTS OF JAPAN, Band 6, Nr. 31, 24.**
**Februar 1982, Seite (C-92) (909); & JP-A-56-149416**
**(HITACHI KASEI K.K.K.) 19-11-1981**
**(PATENT ABSTRACTS OF JAPAN, Band 4, Nr. 42, 3.**
**April 1980, Seite 121 C 5 (C-5) (524); & JP-A-55-16012**
**(HITACHI KASEI K.K.K.) 04-02-1980**

(73) Patentinhaber : **BASF Aktiengesellschaft**
**Carl-Bosch-Strasse 38**
**D-6700 Ludwigshafen (DE)**

(72) Erfinder : **Demmler, Kurt, Dr.**
**Irisstrasse 8**
**D-6700 Ludwigshafen (DE)**
Erfinder : **Scholz, Dankmar**
**Heidelberger Ring 31**
**D-6710 Frankenthal (DE)**

EP 0 118 786 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**0 118 786**

**Beschreibung**

Die Erfindung betrifft ein Verfahren zur Herstellung von thermisch stabilen, hochwärmeformbeständigen Formstoffen aus ungesättigten Polyesterharzen, die eine Cyclopenten- oder Cyclohexen-Gruppierung enthalten.

Formstoffe aus ungesättigten Polyesterharzen, die mit Dicyclopentadien oder dessen Derivaten modifiziert sind, weisen bekanntlich eine hohe Temperaturbeständigkeit und Wärmeformbeständigkeit auf. Diese außerordentlichen Eigenschaften werden allerdings erst nach längerem Lagern bei hohen Temperaturen erreicht. Der Erfindung lag die Aufgabe zugrunde, diese hohe Temperaturbeständigkeit in kürzerer Zeit zu erreichen und auf reproduzierbare Weise thermisch stabile, hochwärmeformbeständige Formstoffe herzustellen.

Diese Aufgabe wird erfindungsgemäß dadurch gelöst, daß man Lösungen von ungesättigten Polyesterharzen, die Cyclopenten- oder Cyclohexen-Gruppierungen enthalten, in Vinylmonomeren in zwei Stufen härtet, nämlich zunächst bei Temperaturen unterhalb 100 °C in Gegenwart von bei diesen Temperaturen zerfallenden Radikalbildnern und dann bei Temperaturen oberhalb von 200 °C in Gegenwart von oberhalb 140 °C zerfallenden Radikalbildnern oder durch Bestrahlung mit beschleunigten Elektronen.

In « Patent Abstracts of Japan », Band 6, Nr. 31, Seite (C-92), 909, ist die Härtung eines keine Monomeren enthaltenden ungesättigten Polyesters mit Cyclopentengruppen mit Hilfe eines Peroxids bei Temperaturen zwischen 100 und 230 °C beschrieben.

US-A-3,919,063 beschreibt die Elektronenstrahlhärtung von Überzügen aus Cyclopentengruppen enthaltenden ungesättigten Polyesterharzen, die bei Raumtemperatur durchgeführt wird.

Ausgangsmaterial für das erfindungsgemäße Verfahren sind ungesättigte Polyester aus ethylenisch ungesättigten Dicarbonsäuren und Diolen. Als ethylenisch ungesättigte Dicarbonsäuren oder deren Anhydride kommen insbesondere Maleinsäure, Fumarsäure, Itaconsäure und Tetrahydrophthalsäure, sowie deren Anhydride in Frage, wobei Maleinsäureanhydrid bevorzugt ist. Daneben können andere Carbonsäuren oder Anhydride, wie Adipinsäure, o-Phthalsäureanhydrid, Trimellithsäure oder Pyromellithsäure mitverwendet werden.

Geeignete Diole sind z. B. Propylenglykol-1,2, Ethylenglykol, Diethylenglykol, Butandiol-1,3, Butandiol-1,4, Neopentylglykol sowie hydriertes Bisphenol A. Daneben können Polyole, wie Trimethylolpropan, Glyzerin und Pentaerythrit mitverwendet werden.

Zum Einbau der Cyclopenten- bzw. Cyclohexen-Gruppierungen in die ungesättigten Polyester werden diese mit Dicyclopentadien bzw. dessen Derivaten oder Substitutionsprodukten modifiziert, vorzugsweise mit Dicyclopentadien oder Endomethylentetrahydrophthalsäure. Diese Umsetzungen sind bekannt. Wenn man von Diestern mit hoher Säurezahl oder freier Maleinsäure ausgeht und bei Temperaturen zwischen 120 und 140 °C arbeitet, erhält man im wesentlichen eine Addition des Dicyclopentadiens an endständige Carboxyl- bzw. Hydroxylgruppen, wobei sich endständige Dicyclopentenylester- bzw. Dicyclopentenylethergruppen bilden. Setzt man Polyester mit niedriger Säurezahl ein und arbeitet bei höheren Temperaturen, vorzugsweise oberhalb von 170 °C, so spaltet sich das Dicyclopentadien in zwei Moleküle Cyclopentadien, welches sich an Ethylendicarbonsäureester-Strukturen des Polyesters addiert und Endomethylentetrahydrophthalsäure-ester-Strukturen bildet. Diese Strukturen lassen sich auch durch den Einsatz von Endomethylentetrahydrophthalsäure oder deren Anhydrid erzeugen.

Bei einer bevorzugten Ausführungsform werden die modifizierten ungesättigten Polyester einem zusätzlichen Endgruppenverschluß mit N-Hydroxialkyltetrahydrophthalimid vorzugsweise N-Hydroxiethyltetrahydrophthalimid bzw. N-Hydroxialkylendomethylentetrahydrophthalimid vorzugsweise N-Hydroxiethylendomethylentetrahydrophthalimid unterworfen. Solche Umsetzungen sind z. B. in der deutschen Patentanmeldung DE-A-32 30 924 beschrieben.

Die modifizierten ungesättigten Polyester werden in Vinylmonomeren gelöst, wobei üblicherweise 30 bis 100 Gew.teile Monomer auf 100 Gew.teile Polyester verwendet werden. Geeignete Vinylmonomere sind z. B. Styrol, Methylstyrol, Chlorstyrol oder Methylmethacrylat. Darüberhinaus können bevorzugt zusätzlich noch Monomere verwendet werden, die erst bei höheren Temperaturen polymerisieren, z. B. Diallylphthalat, trans-Endomethylentetrahydrophthalsäurediethylester oder Endomethylentetrahydrophthalsäuredihydroxiethylester.

Die ungesättigten Polyester können die üblichen Zusatzstoffe, wie Füllstoffe, Verstärkungsfasern, Inhibitoren, Stabilisatoren, Farbstoffe, Pigmente, Eindickmittel und Beschleuniger bzw. Promotoren enthalten.

Die Lösungen der modifizierten ungesättigten Polyester in Vinylmonomeren werden erfindungsgemäß in zwei Stufen gehärtet : In der ersten Stufe arbeitet man bei Temperaturen unterhalb von 100 °C in Gegenwart von üblichen Kalthärtungssystemen, z. B. Ketonperoxid/Cobaltbeschleuniger oder Acylperoxid/Aminbeschleuniger. Bei dieser Härtung erfolgt die Copolymerisation der Vinylmonomeren mit den Ethylendicarbonester-Doppelbindungen des ungesättigten Polyesters.

In der 2. Stufe erfolgt die erfindungsgemäße Nachhärtung bei Temperaturen oberhalb von 200 °C, vorzugsweise zwischen 210 und 260 °C, durch Zerfall des stabileren Radikalbildners, der in der ersten

2

Stufe noch nicht zersetzt wurde. Als Radikalbildner kommen z. B. Dicumylperoxid, Ditertiärbutylperoxid, Perketale oder C-C-labile Verbindungen in Frage. Die Halbwertszeit dieser Radikalbildner bei 130 °C ist vorzugsweise größer als 2 Stunden. Sie werden bevorzugt in Mengen von 1 bis 5 Gew.% dem ungesättigten Polyester zugesetzt. Statt mit Radikalbildnern kann die Nachhärtung auch durch Bestrahlen mit beschleunigten Elektronen initiiert werden, wobei ebenfalls Radikale gebildet werden. Dabei ist darauf zu achten, daß die Beschleunigungsspannung der Dicke der zu härtenden Schicht angepaßt ist. Für dünne Filme (Dicke max. 1 000 μm) reicht eine Beschleunigungsspannung von etwa 300 KV, für etwa 1 cm Dicke Schichten ist eine solche von etwa 1 MV erforderlich.

Zur Härtung sollen die Formstoffe mindestens 10 min bei Temperaturen oberhalb von 200 °C gehalten werden, die besonders bevorzugte Härtungsdauer beträgt 30 min bis 1 Tag.

Bei dieser Nachhärtung erfolgt eine Vernetzung der Cyclopenten- bzw. Cyclohexen-Gruppierungen, sowie gegebenenfalls eine Copolymerisation mit den zugesetzten bei höheren Temperaturen polymerisierenden Monomeren.

Durch die erfindungsgemäße Nachhärtung wird die Vernetzungsdichte und damit auch die Temperaturbeständigkeit der Formstoffe stark erhöht. Wegen ihrer hohen thermischen Beständigkeit und Wärmeformbeständigkeit sind die Formstoffe überall dort einsetzbar, wo diese Eigenschaften, verbunden mit einer guten Chemikalienbeständigkeit und ausgezeichneten dielektrischen Werten verlangt werden, also z. B. auf dem Elektrosektor, im Motorraum des Automobils usw.

Die in den folgenden Beispielen genannten Teile und Prozente beziehen sich auf das Gewicht. Die Messungen der Glastemperatur Tg und des Schubmoduls G' (250 °C) erfolgten an 6 × 1 × 0,1 cm großen Streifen nach DIN 53 445.

Tg ist ein Maß für die Wärmeformbeständigkeit, G' (250 °C) für die Vernetzungsdichte und die Steifheit des Formstoffs bei 250 °C.

## Beispiel 1

441 Teile Maleinsäureanhydrid, 242 Teile Ethylenglykol und 392 Teile N-Hydroxiethyltetrahydrophthalimid werden nach Zusatz von 0,1 Teilen Toluhydrochinon in üblicher Weise unter Rühren und Darüberleiten von Stickstoff innerhalb 3 1/2 h bei 190 °C bis zu einer Säurezahl von 44 verestert. Dann werden bei dieser Temperatur während 1 h 99 Teile Dicyclopentadien zugetropft und weiterverestert bis zu einer Säurezahl von 23. Erhalten werden 1 083 Teile eines klaren, weichen Harzes (Schmelzviskosität bei 150 °C : 240 mPas).

1 000 Teilen des erhaltenen Polyesters wurden 0,057 Teile Toluhydrochinon zugesetzt, dann wurde der Polyester bei Temperaturen unterhalb von 120 °C in 492 Teilen Styrol gelöst. Schließlich wurden 20 Teile Methylethylketonperoxid und 2 Teile einer styrolischen Cobalt-Beschleunigerlösung (1 % Co), sowie verschiedene Mengen von hochzerfallenden Radikalbildnern und gegebenenfalls von weiteren Monomeren zugesetzt. Die Harzlösungen wurden auf Glasscheiben zwischen Folien zu 1 mm dicken Platten gegossen, die 24 h bei Raumtemperatur und dann 1 h bei 120 °C gehärtet wurden. Dann wurden die Folien abgezogen und die Proben im Trockenschrank bei 220 °C 1/2 h bzw. 24 h nachgehärtet. Die Proben f und g wurden zusätzlich bei 220 °C noch eine halbe Stunde mit beschleunigten Elektronen aus einem Van de Graaf-Generator bei einer Spannung von 1 MV mit einer Dosis von 10 Mrad bzw. 30 Mrad bestrahlt.

Ergebnisse

| Versuch | Peroxid | Menge % | Monomer | Menge % | Nachhärtung 1/2 h Tg | G' (250°C) | Nachhärtung 24 h Tg | G' (250°C) |
|---|---|---|---|---|---|---|---|---|
| a | – | | | – | 130/160 | 16 | 180/220 | 48 |
| b | DCUP | 1 | | – | 180 | 35 | 225 | 70 |
| c | " | 2 | | – | 160/180 | 30 | 230 | 85 |
| d | DTBP | 2 | | – | 180 | 39 | 230 | 90 |
| e | " | 4 | | – | 185 | 52 | 230 ' | 98 |
| f | DCUP | 2 (+10 Mrad) | | – | 215 | 50 | | |
| g | " | 2 (+30 Mrad) | | – | 220 | 80 | | |
| h | DCUP | 2 | DAP | 10 | 170 | 37 | 225 | 82 |
| 1 | " | 2 | E 1 | 10 | 180 | 40 | 230 | 130 |
| k | " | 2 | E 2 | 10 | 170 | 35 | 220 | 90 |

DCUP = Dicumylperoxid
DTBP = Di-tert.-Butylperoxid
DAP = Diallylphthalat
E 1 = trans-Endomethylentetrahydrophthalsäurediethylester
E 2 = trans-Endomethylentetrahydrophthalsäuredihydroxiethylester

0 118 786

## Beispiel 2

294 Teile Maleinsäureanhydrid, 148 Teile Ethylenglykol und 318 Teile N-Hydroxiethylendomethylentetrahydrophthalimid werden nach Zusatz von 0,1 Teilen Toluhydrochinon unter Rühren und Darüberleiten von Stickstoff innerhalb 2 h bei 190 °C bis zu einer Säurezahl von 60 verestert. Dann werden bei dieser Temperatur während 1 h 66 Teile Dicyclopentadien zugetropft und weiter verestert bis zu einer Säurezahl von 23. 700 Teile dieses fast harten, klaren Harzes werden nach Zusatz von 0,012 Teilen Toluhydrochinon bei Temperaturen unterhalb 120 °C in 345 Teilen Styrol gelöst (Viskosität bei 23 °C 532 mPas). Dann wurden 2 % Methylethylketonperoxid, 0,2 % einer 1 %igen Cobaltbeschleunigerlösung (1 % Co) und 2 % Dicumylperoxid zugesetzt. Die Harzlösung wurde wie in Beispiel 2 zu einer Platte gegossen, gehärtet und bei 220 °C a) 1/2 h bzw. b) 24 h lang nachgehärtet.

Ergebnisse

| Versuch | $T_g$ [°C] | $G'$ (250 °C) [N . mm$^{-2}$] |
|---------|-----------|-------------------------------|
| a | 180 | 41 |
| b | 230 | 160 |

## Beispiel 3

117 Teile Maleinsäureanhydrid und 37 Teile Ethylenglykol werden nach Zusatz von 0,02 Teilen Toluhydrochinon unter Rühren und Darüberleiten von Stickstoff langsam auf 140 °C erhitzt und 1 h dabei gehalten. Dann werden 63 Teile Dicyclopentadien innerhalb 1/2 h bei dieser Temperatur zugetropft und weitere 1 1/2 h dabei gehalten. Nach Zugabe von 27 Teilen Ethylenglykol wird auf 190 °C aufgeheizt und dabei gehalten bis zu einer Säurezahl von 62. Dann werden 26,3 Teile Dicyclopentadien (nach Aufsetzen eines Rückflußkühlers) zugetropft. Nach 1 h bei 190 °C wird der Rückflußkühler entfernt und in üblicher Weise die Veresterung bis zu einer Säurezahl von 30 fortgesetzt. Der ungesättigte Polyester wird nach Zusatz von 0,017 Teilen Toluhydrochinon bei Temperaturen unter 120 °C in 124 Teilen Styrol gelöst (Viskosität bei 23 °C 1 300 mPas). Dann wurden 2 % Methylethylketonperoxid, 0,2 % einer 1 %igen Cobaltbeschleunigerlösung (1 % Co) und 2 % Dicumylperoxid zugesetzt (Versuch a). In einem weiteren Versuch (b) wurden noch 10 % trans-Endomethylentetrahydrophthalsäurediethylester zugegeben. Die Harzlösungen wurden wie in Beispiel 2 zu einer Platte gegossen, gehärtet und bei 220 °C 1/2 h bzw. 24 h nachgehärtet.

Zum Vergleich wurde der Versuch a ohne Dicumylperoxid gehärtet (Versuch c).

Ergebnisse

| Versuch | Nachhärtung 1/2 h | | Nachhärtung 24 h | |
|---------|-------------------|-----------|------------------|-----------|
| | $T_g$ | $G'$ (250 °C) | $T_g$ | $G'$ (250 °C) |
| a | 180 | 46 | 200 | 140 |
| b | 175 | 50 | 225 | 120 |
| c | 120/175 | 21 | 175/250 | 115 |

## Beispiel 4

2 254 Teile Maleinsäureanhydrid und 1 426 Teile Ethylenglykol werden nach Zusatz von 0,326 Teilen Toluhydrochinon unter Rühren und Darüberleiten von Stickstoff innerhalb 4 h bei 190 °C bis zu einer Säurezahl von 72 verestert. Zu 800 Teilen dieses ungesättigten Polyesters werden 182,5 Teile Dicyclopentadien innerhalb 1 1/2 h bei 200 °C zugetropft und bei dieser Temperatur bis zu einer Säurezahl von 36 weiter verestert (Schmelzviskosität bei 150 °C : 1 120 mPas). 900 Teile dieses ungesättigten Polyesters werden bei Temperaturen unter 120 °C nach Zusatz von 0,06 Teilen Toluhydrochinon in 443 Teilen Styrol gelöst (Viskosität bei 23 °C 3 120 mPas). Dann wurden 2 % Methylethylketonperoxid, 0,2 % einer 1 %igen Cobaltbeschleunigerlösung (1 % Co) (Versuch a) und zusätzlich 2 % Dicumylperoxid (Versuch b) zugesetzt ; die Harzlösungen wurden wie in Beispiel 2 jeweils zu einer Platte gegossen, gehärtet und bei 220 °C 1/2 h nachgehärtet.

Ergebnis

| Versuch | $T_g$ | $G'$ (250 °C) |
|---------|-------|---------------|
| a | 150 | 31 |
| b | 170 | 75 |

**0 118 786**

**Patentansprüche**

1. Verfahren zur Herstellung von thermisch stabilen, hochwärmeformbeständigen Formstoffen aus ungesättigten Polyesterharzen, die Cyclopenten- oder Cyclohexen-Gruppierungen enthalten, durch Härtung von Lösungen von ungesättigten Polyestern in Vinylmonomeren bei erhöhten Temperaturen, dadurch gekennzeichnet, daß die Härtung in zwei Stufen, zunächst bei Temperaturen unterhalb 100 °C in Gegenwart von bei diesen Temperaturen zerfallenden Radikalbildnern und dann bei Temperaturen oberhalb von 200 °C in Gegenwart von oberhalb 140 °C zerfallenden Radikalbildnern oder durch Bestrahlung mit beschleunigten Elektronen durchgeführt wird.

2. Verfahren nach Anspruch 1, dadurch gekennzeichnet, daß die ungesättigten Polyester mit Dicyclopentadien, Endomethylentetrahydrophthalsäure, N-Hydroxiethyltetrahydrophthalimid oder N-Hydroxiethylendomethylentetrahydrophthalimid modifiziert wurden.

**Claims**

1. A process for the preparation of a heat-stable molding material having high heat distortion resistance from unsaturated polyester resins which contain cyclopentene or cyclohexene groups by curing solutions of unsaturated polyesters in vinyl monomers at elevated temperatures, wherein curing is carried out in two stages, first at below 100 °C in the presence of free radical formers which decompose at these temperatures, and then at above 200 °C in the presence of free radical formers which decompose above 140 °C, or by irradiation with accelerated electrons.

2. The process as claimed in claim 1, wherein the unsaturated polyesters are modified with dicyclopentadiene, endomethylenetetrahydrophthalic acid, N-hydroxy-ethyltetrahydrophthalimide or N-hydroxyethyleneendomethylenetetrahydrophthalimide.

**Revendications**

1. Procédé pour la préparation de matières moulées résistantes à la chaleur et possédant une haute stabilité dimensionnelle à chaud, à partir de résines polyesters insaturées qui contiennent des groupements cyclopentène ou cyclohexène, par durcissement de solutions de polyesters insaturés dans des monomères vinyliques à température élevée, caractérisé en ce que le durcissement est effectué en deux étapes, tout d'abord à des températures de moins de 100 °C en présence de formateurs de radicaux qui se décomposent à ces températures, puis à des températures de plus de 200 °C en présence de formateurs de radicaux qui se décomposent au-dessus de 140 °C ou par irradiation avec des électrons accélérés.

2. Procédé selon la revendication 1, caractérisé en ce que les polyesters insaturés ont été modifiés par le dicyclopentadiène, l'acide endométhylènetétrahydrophtalique, le N-hydroxyéthyltétra-hydrophtalimide ou le N-hydroxyéthylendométhylènetétrahydrophtalimide.

6